# EUROPEAN PATENT SPECIFICATION

(11) **EP 1 854 607 B1**
(45) Date of publication and mention of the grant of the patent: **29.12.2010**
(21) Application number: 07007506.4
(22) Date of filing: 12.04.2007
(51) Int. Cl.: B28B 3/20, B28B 13/04, B28B 15/00, B29C 47/34

(54) **Method for manufacturing a honeycomb structured body**
Verfahren zur Herstellung eines wabenförmig strukturierten Körpers
Procédé de fabrication d'un corps structuré en nid d'abeille

(30) Priority: 08.05.2006 WO PCT/JP2006/309265
(43) Date of publication of application: 14.11.2007
(73) Proprietor: IBIDEN CO., LTD., Ogaki-shi Gifu 503-8604 (JP)
(72) Inventor: Kawai, Tsuyoshi, c/o Ibiden Co., Ltd., Ibigawacho, Ibi-gun, Gifu 501-0695 (JP); Kasai, Kenichiro, c/o Ibiden Co., Ltd., Ibigawacho, Ibi-gun, Gifu 501-0695 (JP); Naruse, Kazuya, c/o Ibiden DPF France S.A.S., Courtenay, 45320 (FR)
(74) Representative: Hoffmann, Klaus

(56) References cited:
- EP-A- 1 013 575
- EP-A- 1 595 666
- EP-A- 1 604 922
- DE-A1- 2 848 302
- GB-A- 2 113 639
- US-A1- 2003 102 602
- US-A1- 2004 194 427
- US-A1- 2005 082 705

## Description

### TECHNICAL FIELD

The present invention relates to a method for manufacturing a honeycomb structured body

### BACKGROUND ART

Particulates such as soot contained in the exhaust gas discharged by the internal combustion engines of vehicles such as busses, trucks, and construction equipment and the like, have become a problem of recent years, in that they cause harm to the environment and the human body. To remedy this, there have been proposed various honeycomb structured bodies comprising porous ceramics, which serve as filters capable of capturing particulates in exhaust gases to purify the exhaust gases.

Conventionally, when manufacturing a honeycomb structured body, first, ceramic powder, binder, and a liquid dispersal medium and the like are mixed to prepare amoist mixture. The moist mixture is then extrusion molded continuously according to use of a die, and the extruded molded body is then cut to a prescribed length. Thus a rectangular pillar-shaped honeycomb molded body is manufactured.

Next, the honeycomb molded body attained above is dried using a microwave drying or a hot-air drying, and afterward, prescribed cells are sealed with a plug in order to achieve a state where one of the end portion of the cells being sealed. After the sealed state has been achieved, a degreasing treatment and a firing treatment are carried out thereon, thus manufacturing the honeycomb fired body.

After this, a sealing material paste is coated onto the sides of the honeycomb fired body, and an aggregated body of honeycomb fired bodies in which a multitude of honeycomb fired bodies are combined with one another by interposing a sealing material layer (adhesive layer). Next, cutting processing using a cutting machine or the like is carried out on the aggregated body of honeycomb fired bodies in order to produce a honeycomb block of a prescribed form, such as cylindrical form, cylindroid form or the like. Finally, sealing material paste is coated over the outer circumference of the honeycomb block to form a sealing material layer (a coat layer), thereby completing the manufacturing of the honeycomb structured body (See Patent Document 1, for instance).

Patent Document 1: JP-A 2002-126427
US 2003/0102602 A1, describes a method for manufacturing a ceramic honeycomb molding according to the preamble of claims 1 and 5, having many cells formed by arranging cell walls in a honeycomb pattern. Deformation, wrinkles, cracks, etc. of the cell walls and the like are prevented from occurring. The method for manufacturing the ceramic honeycomb molding having many cells formed by arranging cell walls in a honeycomb pattern comprises an extruding process in which clayey honeycomb moldings are extruded, a drying process in which the honeycomb moldings are dried, and a storage process, between the extruding process and the drying process, in which the honeycomb moldings are maintained in a high humidity atmosphere.
EP 1 604 922 A2 describes a cradle for a system for conveying ceramic shaped bodies, to prevent deformations, cracks and breakages of the thin-walled ceramic honeycomb shaped bodies upon conveying them. Upon considering impact resistance of the thin-walled ceramic shaped bodies it is indicated that these ceramic shaped bodies should not quickly be moved on to a drying step as an excess acceleration applied to the ceramic shaped bodies should not occur. It is considered necessary to apply a speed reduction and to provide waiting cradles and a waiting station.
EP 1 595 666 A1 describes a method of manufacturing a honeycomb structure having honeycomb segments. The method includes a masking step of attaching masking materials to both end surfaces of the honeycomb segments. The method further comprises a stacked body bonding step of bonding the honeycomb stacked body by bonding the plurality of honeycomb segments together while opposing adhesive layers therebetween. The method further comprises an adhesive layer drying step of integrally fixing the honeycomb stacked body by heating and drying the adhesive layers. The method also comprises a material separating step of separating the masking materials. The method further comprises a grinding step of grinding an outer peripheral portion of the honeycomb stacked body into a predetermined shape.
US 2005/0082705 A1 describes an apparatus for orienting section of a plasticized ceramic extrudate. A grab-and-drag system is utilized to move the extrudate in a linear path within a transfer system and reposition the segment from an extrudate board onto a dryer tray for movement along a conveyor system. A wet log alignment camera system or visual inspection system is then utilized to monitor the alignment of the segment as it rests on the associated dryer tray.
DE 2848302 A1 apparatus for the manufacturing of products like ceramic plates and/or roof tiles. The products may be extruded and via a transport system be conveyed to, for instance, a dryer in an oven, and also often after firing to a storage position.

### DISCLOSURE OF THE INVENTION

### PROBLEMS TO BE SOLVED BY THE INVENTION

In a method for manufacturing a honeycomb structured body of the kind mentioned above, in order to improve productivity performance it is desirable to carry out the production of the honeycomb structured body according to a single continuous production line in which each of the processes therein runs continuously.
However, in a case in which the entire process runs continuously with synchronization with one another, when a trouble has arisen in one of the processes and the operation of the process must be halted, it becomes necessary to halt the operation of other processes in which no trouble has arisen. This results in a remarkable decrease in productivity.

Also, depending upon the process, there are processes that, after the completion of a certain process, the next process is required to run continuously (within a prescribed period of time). And in a case in which a trouble has arisen in a process after these processes, thereby requiring the halting of the entire production line, even if all the processing up to a certainprocess has been completed, it is impossible to carry on to the next process within a prescribed period of time. Thus, it results in a case where the immature product of the processes that have been completed up to the certain process must be discarded.
More specifically, for instance, after having produced a honeycomb molded body by carrying out extrusion molding and then cutting the molded body into a prescribed length, if a trouble arises in or after a drying process in a production line in which the molded body must be conveyed to the drying process within a prescribed period of time and it becomes necessary to halt the entire production line including the drying process, even if the production of the honeycomb molded body has been assuredly completed, the molded body is not able to be conveyed to the drying process. Thus, it results in a case where the produced honeycomb molded body must ultimately be discarded.

The inventors of the present invention have exacted keen examination in aim of solving the above-mentioned problem, and have devised a method for manufacturing a honeycomb structured body that is free from the restriction of needing the entire honeycomb molded body production line halted if trouble arises in any of the processes in the production line, and is able to prevent a decrease in productivity, as well as a honeycomb molded body receiving apparatus and a honeycomb molded body taking-out apparatus to be used in this kind of manufacturing method.

### MEANS FOR SOLVING THE PROBLEMS

Specifically stated, the method for manufacturing a honeycomb structured body according to the present invention including a honeycomb fired body, comprises the features of claims 1 and 5

### EFFECTS OF THE INVENTION

With the method for manufacturing a honeycomb structured body of the present invention, since after placing a treated honeycomb molded body into a molded body storage container and temporarily storing it, the treated honeycomb molded body placed in the molded body storage container is taken out and placed atop a conveyer portion headed toward a subsequent process, it is possible to compartmentalize the continuous production process without any decrease in productivity. Thus, even if a trouble arises in any process of a plurality of processes, it is possible to run other processes as usual. As a result, it is possible to avoid the inconvenience of having to discard an immature product due to an arising trouble.

Also, as described above, by compartmentalizing the continuous production process, it is possible to adjust the amount of production as well as to produce and store treated honeycomb molded bodies.

Since the honeycomb molded body receiving apparatus as useable in the present invention is configured to automatically carry out a process of placing the treated honeycomb molded body into the molded body storage container, it is possible to efficiently carry out placement of the treated honeycomb molded body into the molded body storage container without manual effort (manual working).

Since the honeycomb molded body taking-out apparatus as useable in the present invention is configured to automatically carry out process of taking out the treated honeycomb molded body from within the molded body storage container, it is possible to efficiently carry out taking out of the treated honeycomb molded body from within the molded body storage container without manual effort (manual working).

### BEST MODE FOR CARRYING OUT THE INVENTION

First, description will be given in regard to the method for manufacturing a honeycomb structured body of the present invention.
The method for manufacturing a honeycomb structured body according to the present invention is defined in claims 1 and 5.
In the present specification, the shape indicated by the word "pillar" refers to any desired shape of a pillar including a round pillar, an oval pillar, a polygonal pillar and the like.

In the method for manufacturing a honeycomb structured body of the present invention, a plurality of treatment processes are carried out in succession.
In general, (1) a honeycomb molded body production process in which a moist mixture is prepared by mixing and kneading raw material and then the moist mixture is extrusion molded and cut to a prescribed length, (2) a honeycomb molded body drying process in which a drying treatment is carried out on the honeycomb molded body, (3) a honeycomb molded body opening-sealing process in which an opening-sealing treatment of filling a plug material paste into an end portion of the cells of the dried honeycomb molded body is carried out (also referred to as honeycomb molded body plugging process) , (4) a honeycomb molded body degreasing process in which a degreasing treatment is carried out on the honeycomb molded body, (5) a honeycomb molded body f iring process in which a firing treatment is carried out on the degreased honeycomb molded body thereby producing a honeycomb fired body, (6) a honeycomb aggregated body production process in which an aggregated body of honeycomb fired bodies is produced by combining a plurality of honeycomb fired bodies with one another by interposing a sealing material layer (an adhesive layer), (7) a honeycomb block production process in which a honeycomb block of a prescribed shape is produced by machining on the outer circumference of the honeycomb aggregated body, (8) a coat layer forming process in which a sealing material layer (a coat layer) is formed over the circumference of the honeycomb block, and processes of the like, are carried out in succession to produce the honeycomb structured body.

It should be noted that, in the method for manufacturing a honeycomb structured body of the present invention, it is not necessarily required to carry out all of the above-mentioned processes (1) to (8), as it is acceptable to carry out only those processes necessary according to the design of the honeycomb structured body.
Specifically, for example, although it would be necessary to carry out (3) the honeycomb molded body opening-sealing process (honeycomb molded body plugging process) in a case of producing a honeycomb structured body intended to function as a filter, in a case of producing a honeycomb structured body intended to function as a catalyst supporting carrier, however, it is not necessary to carry out (3) the honeycomb molded body opening-sealing process (honeycomb molded body plugging process).
Again, for example, although it would be necessary to carry out (6) the honeycomb aggregated body production process in a case of producing an aggregated honeycomb structured body, in a case of producing an integral honeycomb structured body, however, it is not necessary to carry out (6) the honeycomb aggregated body production process. The distinction between the aggregated honeycomb structured body and the integral honeycomb structured body will be described later.

In the method for manufacturing a honeycomb structured body of the present invention, a treated honeycomb molded body attained through any of the above-mentioned processes (2) to (8) and placed on a conveyer portion to be conveyed to a subsequent process, is stored once temporarily in a molded body storage container, and afterward, is placed atop a conveyer portion to a subsequent process.
It should be noted that, in the present description, the term "treated honeycomb molded body" refers to not only a honeycomb molded body on which a drying treatment and a degreasing treatment have been carried out, but also a honeycomb molded body on which various treatments such as an opening-sealing treatment have been carried out. Further, a honeycomb aggregated body in which a plurality of honeycomb fired bodies produced from honeycomb molded bodies are combined with one another, and a honeycomb aggregated body whose external shape has been machined are also included in the treated honeycomb molded body.

Also, in the method for manufacturing a honeycomb structured body of the present invention, when a treated honeycomb molded body is stored temporarily, the time period of storage is not particularly limited as long as it is to the extent that the physical properties of the treated honeycomb molded body do not change.
For example, it is desirable for the time period of storage to be one month or less in a case of storing a honeycomb molded body on which a drying treatment or has been carried out or a honeycomb molded body on which an opening-sealing treatment has been carried out. Also, in a case of storing a honeycomb molded body on which a firing treatment has been carried out, for example, the time period of storage is not limited.

The molded body storage container used in the above-mentioned method for manufacturing a honeycomb structured body is not particularly limited as long as it is able to have a treated honeycomb molded body being the storage target placed therein. The size of the molded body storage container may be arbitrarily selected. It is desirable, however, that the size of the above-mentioned molded body storage container be the one able to hold a plurality of treated honeycomb molded bodies simultaneously.
Also, the material of the above-mentioned molded body storage container is not particularly limited.

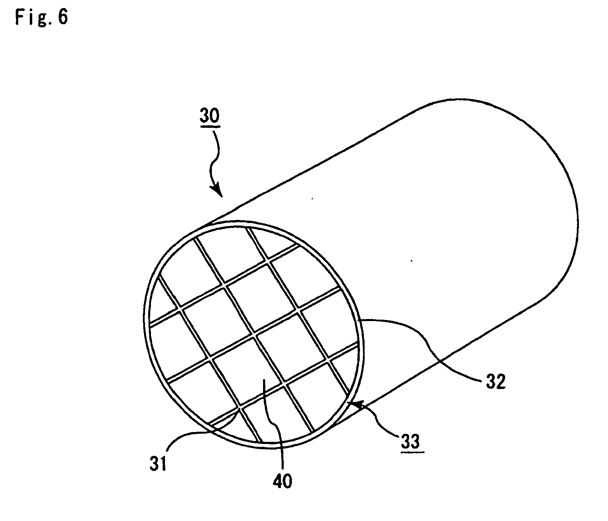

Also, concrete examples of the honeycomb structured body produced with the method for manufacturing a honeycomb structured body of the present invention include the honeycomb structured body (See Fig. 6) produced by firing a pillar shaped honeycomb molded body in which a plurality of cells are placed in parallel with one another in a longitudinal direction with a cell wall therebetween and then combining a plurality of such attained honeycomb fired bodies with one another by interposing a sealing material layer (an adhesive layer) , the pillar-shaped honeycomb structured body made of a single honeycomb sintered body attained by firing a honeycomb molded body in which a plurality of cells are placed in parallel with one another in a longitudinal direction with a cell wall therebetween, and the like.
In the present description, the former honeycomb structured body in which a plurality of honeycomb fired bodies are combined with one another by interposing a sealing material layer (an adhesive layer) is referred to as an "aggregated honeycomb structured body", while the latter pillar-shaped honeycomb structured body made of a single honeycomb sintered body is referred to as an "integral honeycomb structured body".

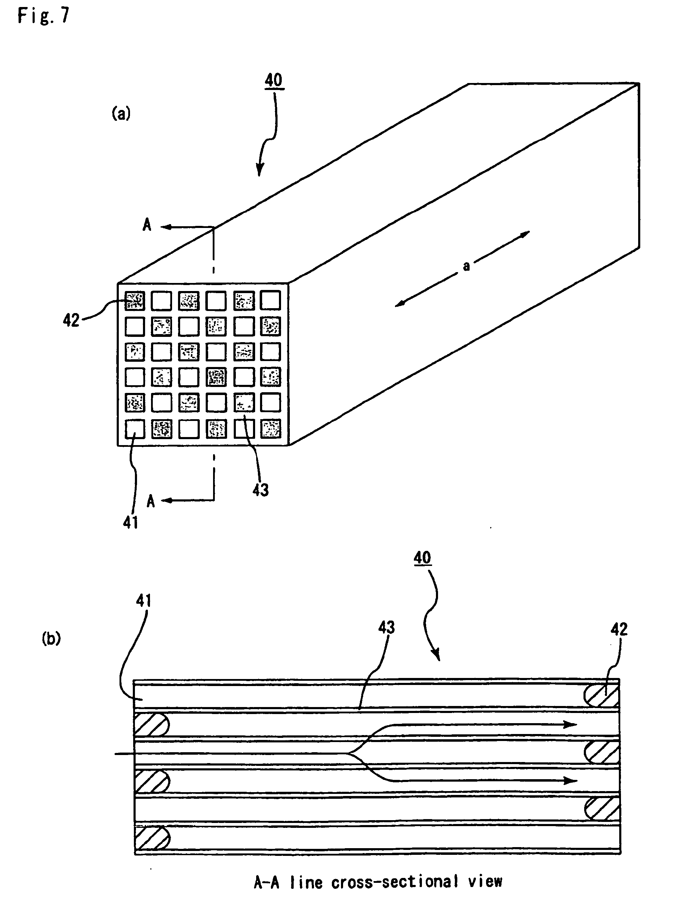

Fig. 6 is a perspective view schematically showing an example of a honeycomb structured body. Fig. 7(a) is a perspective view schematically showing a honeycomb fired body that comprises the above-mentioned honeycomb structured body, while Fig. 7(b) is an A-A cross-sectional view thereof.

In a honeycomb structured body 30, a plurality of honeycomb fired bodies 40, of the kind shown in Fig. 7 (a), are combined with one another by interposing a sealing material layer (an adhesive layer) 31 to form a honeycomb block 33, and a sealing material layer (a coat layer) 32 is formed there over the outer circumference of the honeycomb block 33.
Further, in the honeycomb fired body 40, a multitude of cells 41 are placed in parallel with one another in the longitudinal direction [see Fig. 7 (a)], and cell walls 43, which separate the cells 41, function as filters.

More specifically, as shown in Fig. 7 (b), the end portion on either the inlet side or the outlet side of the cells 41 formed in the honeycomb f ired body 40 are sealed with an opening-sealing layer 42. The exhaust gas flowing into one of the cells 41 passes through the cell walls 43 separating the cells 41 without fail, and flow out through another cell 41. When the exhaust gas passes through the cell wall 43, particulates contained within the exhaust gas are captured by the cell wall 43, thereby purifying the exhaust gas.

Herein below, the method for manufacturing a honeycomb structured body of the present invention will be described in further detail in the order of its process.
Here, a method for manufacturing a honeycomb structured body will be described using and example case of producing a honeycomb structured body having silicon carbide as the chief component of the constitution material.
It is a matter of course, however, that the chief component of the honeycomb structured body is not limited to silicon carbide. Examples of substances suited to use as the chief component of the honeycomb structured body include nitride ceramics such as aluminum nitride, silicon nitride, boron nitride and titanium nitride, carbide ceramics such as zirconium carbide, titanium carbide, tantalum carbide and tungsten carbide, and oxide ceramics such as alumina, zirconia, cordierite, mullite and aluminum titanate, and the like.
Also, examples of constitution material include silicon-containing ceramic of the above-mentioned ceramic blended with metallic silicon, ceramic bonded with silicon, a silicate compound, and the like.
In a case of producing the aggregated honeycomb structured body, it is desirable that the above-mentioned constitution material is silicon carbide or silicon-containing silicon carbide of silicon carbide blended with metallic silicon, and in a case of producing the integral honeycomb structured body, it is desirable that the above-mentioned constitution material is cordierite or aluminum titanate.

In the method for manufacturing a honeycomb structured body of the present invention,
(1-1) first, organic binder is dry mixed with an inorganic powder such as silicon carbide powder having a varying average particle diameter as the ceramic raw material. While the powder blend is being prepared, a solution blend is prepared by blending liquid plasticizer, lubricating agent, and water. Next, the above-mentioned powder blend and the above-mentioned solution blend are further blended together using a wet mixer, and thus a moist mixture for use in manufacturing the molded body is prepared.

Although the particle diameter of the above-mentioned silicon carbide powder is not particularly limited, a particle diameter having little shrinkage during the firing process is preferable. For example, a powder mix of powders of 100 parts by weight having an average particle diameter in the range of 0.3 to 50 µm and powders of 5 to 65 parts by weight having an average particle diameter in the range of 0.1 to 1.0 µm is desirable.
Although in order to adjust the pore diameter and the like of the honeycomb fired body, it is necessary to adjust the firing temperature, the pore diameter can also be adjusted by adjusting the particle diameter of the inorganic powder.

The above-mentioned organic binder is not limited in particular, and for example, binders such as methylcellulose, carboxymethyl cellulose, hydroxyethyl cellulose and polyethylene glycol are acceptable for use therein. Of the binders mentioned above, methylcellulose is the more preferable.
It is preferable that the above-mentioned binder be blended with the inorganic powder at a ratio of 1 to 10 parts by weight of binder per 100 parts by weight of inorganic powder.

The above-mentioned plasticizer is not limited in particular, and for example, glycerin and the like are acceptable for use as such.
The above-mentioned lubricating agent is not limited in particular, and for example, polyoxyalkylene compounds such as polyoxyethelyne alkyl ether and polyoxypropylene alkyl ether are acceptable for use as such.
Some concrete examples of lubricating agents are polyoxyethelyn monobutyl ether, polyoxypropylene monobutyl ether and the like.
Also, in some cases, it is unnecessary to use plasticizer or lubricating agent in the above-mentioned solution blend.

Also, when preparing the above-mentioned moist mixture, it is acceptable to use a diffusion medium such as water, organic solvents such as benzol, and alcohol such as methanol, and the like, for example. Further, it is also acceptable to add a mold aiding agent to the above-mentioned moist mixture.
The mold aiding agent is not limited in particular, and for example, ethylene glycol, dextrin, fatty acids, fatty acid soap, poly alcohol and the like may be used.

Further, it is acceptable, according to the need, to add a pore-forming agent such as balloon, which is a micro sized hollow sphere having oxidant family ceramic as a component therein, spherical acrylic particles, graphite and the like, to the above-mentioned moist mixture.
The above-mentioned balloon is not particularly limited, as alumina balloons, glass micro balloons, shirasu balloons, fly ash balloons (FA balloons), mullite balloons and the like, for example, are all acceptable for use. Of the above-mentioned, alumina balloon is the more preferable for use.

Also, it is preferable for the temperature of the moist mixture prepared here, which uses silicon carbide, to be 28°C or less. This is because if the temperature is too high, organic binder will undergo gelatinization.
It is also preferable for the organic ratio within the above-mentioned moist mixture to be 10% by weight or less, and it is also preferable for the moisture content weight of the same moist mixture to be in the range of 8 to 20% by weight.

(1-2) Next, this moist mixture is extrusion molded using an extrusion molding method or the like to produce a molded body. The attained molded body is then cut to a prescribed length using a cutting machine or the like to produce a pillar shaped honeycomb molded body in which a plurality of cells are placed in parallel with one another in a longitudinal direction with a cell wall therebetween.

(2) Next, a drying treatment is carried out on the above-mentioned honeycomb molded body.
The above-mentioned drying treatment can be carried out using a drying apparatus such as a microwave drying apparatus, a hot air drying apparatus, a dielectric drying apparatus, a reduced pressure drying apparatus, a vacuum drying apparatus, or a freeze drying apparatus.
This drying treatment may be carried out according to necessity.

(3) Next, according to necessity, a opening-sealing treatment is carried out in which a prescribed amount of plug material paste is filled into the end portion of the cells of the honeycomb molded body, thereby sealing the cells.
Although the above-mentioned plug material paste is not limited in particular, it is preferable that the plug material paste layer, manufactured in the subsequent process, has porosity in the range of 30 to 75%. For example, it is possible to use, as the plug material paste, any one of the above-mentioned moist mixtures.
In a case of filling in the plug material paste, it is desirable to dry the filled-in plug material paste.

(4) Next, according to necessity, a degreasing treatment is carried out under prescribed conditions (at 200 to 500°C, for example) on the honeycomb molded body in which the above-mentioned plug material paste has been filled.

(5) Moreover, a firing treatment is carried out at a prescribed temperature (at 1400 to 2300°C, for example) on the degreased honeycomb molded body.
According to doing so it is possible to produce a pillar shaped honeycomb fired in which a plurality of cells are placed in parallel with one another in a longitudinal direction with a cell wall therebetween.

(6) Next, a sealing material paste layer is formed by coating the side surfaces of the honeycomb fired body with a sealing material paste which will be a sealing material layer. After this, another honeycomb fired body is stacked onto the above-mentioned honeycomb fired body sequentially. Bycarrying out the above process repeatedly and after a prescribed number of honeycomb fired bodies are stacked, the sealing material paste layer is dried and then solidified by carrying out a heating treatment thereon, thereby manufacturing an aggregated body of honeycomb fired bodies (a honeycomb aggregated body) of prescribed size, the honeycomb fired bodies combined with one another by interposing the sealing material layer (adhesive layer).

It is possible to use a substance containing inorganic fibers and/or inorganic particles, inorganic binder and organic binder, for example, as the above-mentioned sealing material paste.
It is acceptable to use silica sol, alumina sol and the like as the above-mentioned inorganic binder. Also, each of the above materials may be used alone, or two or more of them may be used in combination. Of the above-mentioned inorganic binders, silica sol is more preferable for use.

It is acceptable to use polyvinyl alcohol, methylcellulose, ethylcellulose, carboxy methylcellulose, and the like, for example, as the above-mentioned organic binder. Also, each of the above materials may be used alone, or two or more of them may be used in combination. Of the above-mentioned organic binders, carboxy methylcellulose is more preferable for use.

It is acceptable to use ceramic fibers such as silica-alumina, mullite, alumina and silica, and the like, for example, as the above-mentioned inorganic fibers. Also, each of the above materials may be used alone, or two or more of them may be used in combination. Of the above-mentioned inorganic fibers, alumina fiber is more preferable for use.

It is acceptable to use carbide, nitride, and the like, for example, as the above-mentioned inorganic particles. More specifically, it is acceptable to use inorganic powder and the like comprisedof siliconcarbide, siliconnitride, boronnitride, or the like, for example, as the above-mentioned inorganic particles. Each of the above materials may be used alone, or two or more of them may be used in combination. Of the above-mentioned inorganic particles, silicon carbide, which excels in its thermal conductivityproperties, is more preferable for use.

And furthermore, it is also acceptable, according to need, to add a pore-forming agent such as balloon which is a micro sized hollow sphere having oxidant family ceramic as a component therein, spherical acrylic particles, or graphite and the like, to the above-mentioned sealing material paste.
The above-mentioned balloon is not particularly limited, as alumina balloons, glass micro balloon, shirasu balloon, fly ash balloon (FA balloon), mullite balloon and the like, for example, are all acceptable for use. Of the above-mentioned, alumina balloon is more preferable for use.

(7) Next, using a diamond cutter or the like, a cutting treatment is carried out on the honeycomb aggregated body in which a plurality of honeycomb fired bodies are adhered with one another by interposing the sealing material layer (the adhesive layer) to produce a cylindrical shaped honeycomb block.

(8) Next, according to need, by forming another sealing material layer on the outer circumference of the honeycomb block using the above-mentioned sealing material paste, it is possible to produce a honeycomb structured body having the sealing material layer (the coat layer) disposed thereon the outer circumference portion of a cylindrical honeycomb block comprised of aplurality of honeycomb fired bodies combined with one another by interposing the sealing material layer (the adhesive layer).

(9) Afterward, according to need, it is acceptable to support a catalyst on the honeycomb structured body. Also, the above-mentioned supporting of the catalyst may be carried out on the honeycomb fired bodies at the point before the honeycomb fired bodies are manufactured into the honeycomb aggregated body.
In a case where the catalyst is supported, it is preferable that a film of alumina, which has a high specific surface area, be formed onto the surface of the honeycomb structured body, and a co-catalyst or a catalyst such as platinum is applied to the surface of the alumina film.

Examples of the above-mentioned method of forming the alumina film onto the surface of the above-mentioned honeycomb structured body include a method of impregnating the honeycomb structured body with solution of a metallic compound containing an aluminum species such as Al (NO₃)₃ and the like, for example, and then heating, a method of impregnating the honeycomb structured body with a solution containing alumina powder and then heating, or like methods.
Examples of the above-mentioned method of applying the co-catalyst onto the above-mentioned alumina film include a method of impregnating the honeycomb structured body with solution of a metallic compound containing a rare earth element such as Ce (NO₃)₃ and the like, for example, and then heating, or like methods.
Examples of the above-mentioned method of applying the catalyst onto the above-mentioned alumina film include a method of impregnating the honeycomb structured body with a substance such as a dinitrodiammine platinum nitric acid solution ([Pt (NH₃)₂ (NO₂)₂] HNO₃, platinum content 4.53% by weight) and then heating, and other like methods.
Also, it is acceptable to apply the catalyst with a method of first applying the catalyst to alumina particles in advance, and subsequently impregnating the honeycomb structured body with the solution containing the alumina powder.

Although the method for manufacturing a honeycomb structured body put forth up to this point is a method for manufacturing an aggregated honeycomb structured body, the honeycomb structured body to be manufactured according to the method for manufacturing a honeycomb structured body of the present invention can also be an integral honeycomb structured body.

In a case of manufacturing an integral honeycomb structured body of this sort, the only aspect that is different than in a case of manufacturing an aggregated honeycomb structured body is that the size of the extrusion molded honeycomb molded body in the case of manufacturing an integral type honeycomb structured body is larger than in the case of manufacturing the aggregate type honeycomb structured body, and all other aspects used to manufacture an integral honeycomb structured body are identical to those used [the above-mentioned processes (1-1) and (1-2)] in manufacturing an aggregated honeycomb structured body.

Next, in the same manner as in the production of the aggregated honeycomb structured body, according to necessity, a drying treatment and a opening-sealing treatment [the above-mentioned processes (2) and (3)] are carried out, and afterward, in the same manner as in the production of the aggregated honeycomb structured body, a degreasing treatment and a firing treatment [the above-mentioned processes (4) and (5)] are carried out to produce a honeycomb block. Then, according to necessity, by forming a seal material layer (the coat layer) [the above-mentioned process (8)], it is possible to produce an integral honeycomb structured body. It is also acceptable to carry out the process [the above-mentioned process (9)] of supporting the catalyst described above on the above-mentioned integral honeycomb structured body as well.

In the method for manufacturing a honeycomb structured body of the present invention, during the above-described successive processes, after temporarily storing the treated honeycomb molded body situated atop the conveyer portion in the molded body storage container, the treated honeycomb molded body placed in the above-mentioned molded body storage container is accordingly taken out from the molded body storage container and placed atop a conveyer portion headed to a subsequent process.

Specifically, in a case where the method for manufacturing a honeycomb structured body of the present invention carries out the drying treatment [the above-mentioned process (2)] and the firing treatment [the above-mentioned process (5)], it is preferable the treated honeycomb molded body placed inside of the molded body storage container is the one on which the drying treatment [the above-mentioned process (2)] and/or the firing treatment [the above-mentioned process (5)] is carried out.
This is because these treated honeycomb molded bodies are particularly suited to being held temporarily. This also, is because if a pre-dried honeycomb molded body produced through the above-mentioned process (1) is to be temporarily stored before carrying out the drying treatment thereon, for example, it is impossible for the honeycomb molded body being stored to retain its shape due to the presence of a liquid binder therein, giving a rise to the concern of a possible change in the dimensions of the honeycomb molded body. On the other hand, the concern over a change in the physical properties of the honeycomb molded body having the above-mentioned drying treatment carried out thereon or the honeycomb molded body having the above-mentioned firing treatment carried out thereon is extremely small even stored for a long term.

Also, in the method for manufacturing a honeycomb structured body of the present invention, in cases of producing a honeycomb structured body intended to function as a filter (i. e. a honeycomb structured body in which a plug material layer is formed on either end portion of the cells), it is preferable that the treated honeycomb molded body placed inside of the molded body storage container be the one on which any of the drying treatment [the above-mentioned process (2)], the opening-sealing treatment [the above-mentioned process (3)] and thefiringtreatment [theabove-mentionedprocess (5)] is carried out.
This is because the concern over a change in the dimensions of a honeycomb structured body on which these treatments have been carried out is extremely small even during a long term storage, being particularly suitable to a temporary storage.
For example, as has been put forth above, if a pre-dried honeycomb molded body produced through the above-mentioned process (1) is to be stored before carrying out the drying treatment thereon, it is impossible for the honeycomb molded body being stored to retain its shape due to the presence of a liquid binder therein, giving a rise to the concern of a possible change in the dimensions of the honeycomb molded body. On the other hand, the concern over a change in the physical properties of the honeycomb molded body having the above-mentioned drying treatment carried out thereon, of the honeycomb molded body having the above-mentioned opening-sealing treatment carried out thereon, or of the honeycomb molded body having the above-mentioned firing treatment carried out thereon is extremely small even stored for a long term.

Also, as a honeycomb structured body to be manufactured, even though a honeycomb filter also used for the purpose of capturing airborne particulates within exhaust gas has been the center of description up till this point, the honeycomb structured body to be manufactured in the present invention can be also suitable to be used as a catalyst supporting carrier (a honeycomb catalyst) configured to convert exhaust gas.

The operation of temporarily storing a honeycomb molded body in this kind of method for manufacturing a honeycomb structured body of the present invention can be carried out using the honeycomb molded body receiving apparatus or the honeycomb molded body taking-out apparatus which will be described next.
In the honeycomb molded body receiving apparatus useable in the present invention, it is possible to optimally carry out the operation of placing a treated honeycomb molded body into a molded body storage container, and with the honeycomb molded body taking-out apparatus of the present invention, it is possible to optimally carry out the operation of taking out a treated honeycomb molded body from inside of a molded body storage container.

The description of the honeycomb molded body receiving apparatus useable in the present invention will be given referring to
the figures. A honeycomb molded body receiving apparatus useable in the present invention used when placing the treated honeycomb molded body into the molded body storage container in the method for manufacturing a honeycomb structured body according to the present invention, comprises:
a molded body pre-storage container induction portion configured to stack and hold an empty molded body storage container;
a first molded body storage container movement mechanism configured to move the empty molded body storage container in the upward/downward direction and/or the horizontal direction to situate the molded body storage container in a prescribed location;
a robotic arm configured to lift up and move the treated honeycomb molded body situated on a conveyer portion using a holding portion, and place the treated honeycomb molded body inside of the empty molded body storage container situated in the prescribed location;
a second molded body storage container movement mechanism configured to stack the molded body storage container having the treated honeycomb molded body placed therein onto a molded body storage container having another treated honeycomb molded body placed therein; and
a molded body post-storage container taking-out portion configured to stack and hold the molded body storage container having the treated honeycomb molded body placed therein.
At this point, the honeycomb molded body receiving apparatus useable in the present invention will be described using as an example of a case in which the treated honeycomb molded body is the one on which the drying treatment has been carried out.

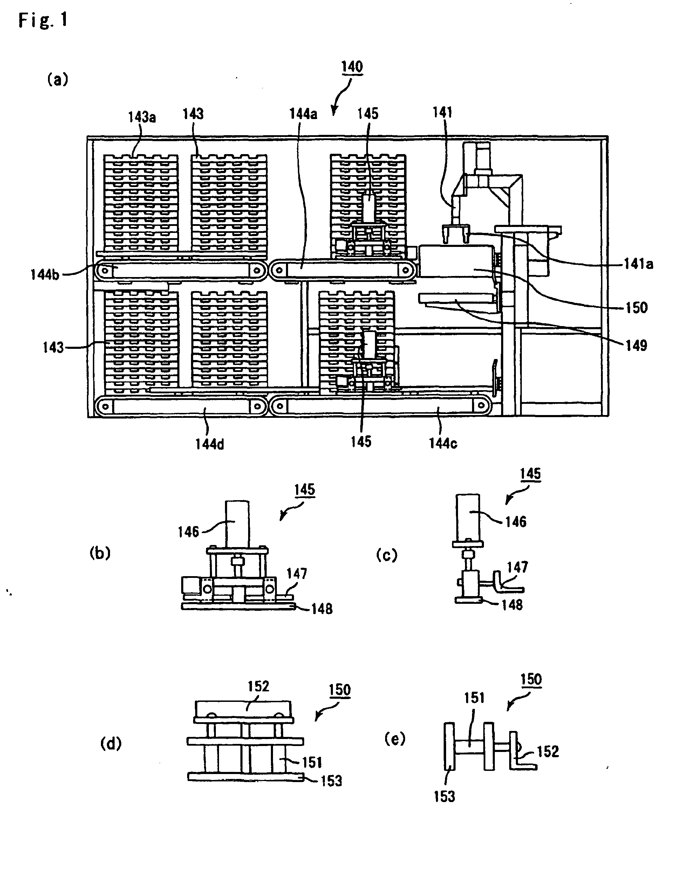

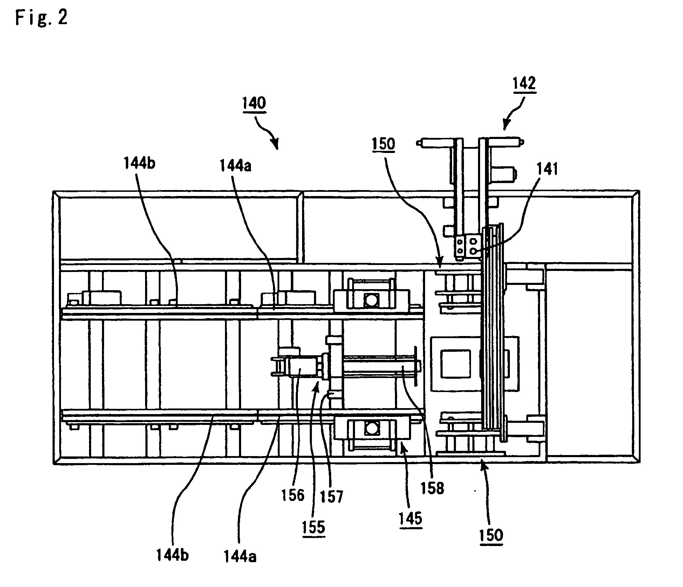

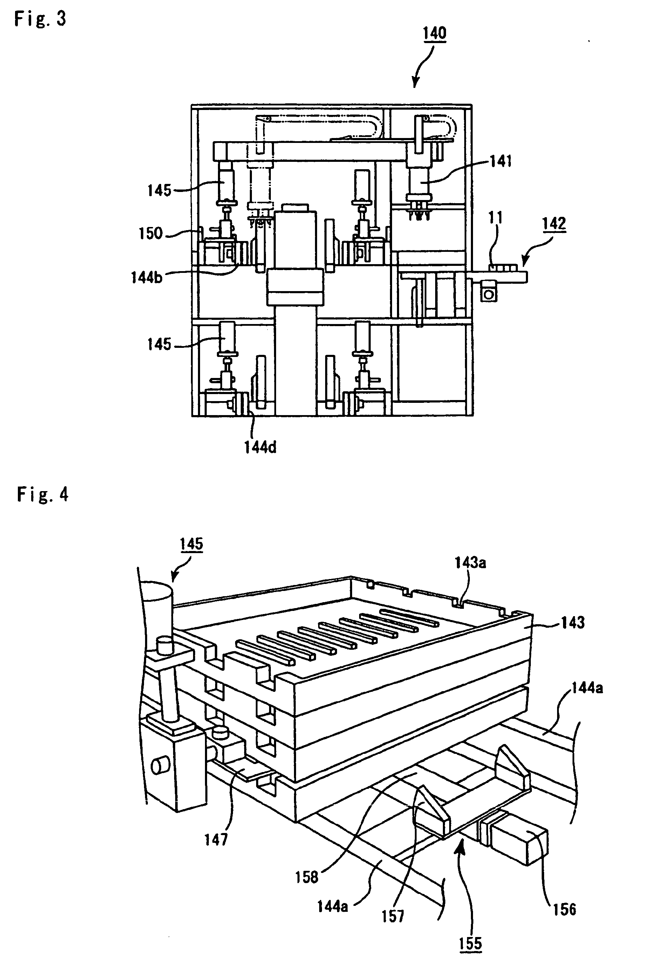

Fig. 1(a) is a front view schematically showing a honeycomb molded body receiving apparatus as useable in the present invention. Fig. 1 (b) is a front view showing a storage container lifting apparatus comprising the honeycomb molded body receiving apparatus shown in Fig. 1(a). Fig. 1(c) is a side view of the storage container lifting apparatus shown in Fig. 1(b). Fig. 1(d) is a plan view of a storage container support apparatus comprising the honeycomb molded body receiving apparatus shown in Fig. 1(a). Fig. 1(e) is a side view of the storage container support apparatus shown in Fig. 1(d).
Also, Fig. 2 is a plan view of the honeycomb molded body receiving apparatus shown in Fig. 1(a). Fig. 3 is a side view of the honeycomb molded body receiving apparatus shown in Fig. 1(a). Fig. 4 is an enlarged perspective view showing a close up of the storage container lifting apparatus and a storage container moving apparatus comprising the honeycomb molded body receiving apparatus shown in Fig. 2.

As shown in Fig. 1(a) and Figs. 2 to 4, this honeycomb molded body receiving apparatus 140 is mainly comprised of: a robotic arm 141 which lifts a honeycomb molded body (treated honeycomb molded body) 11 on which a drying treatment is carried out and moves it; belt conveyers 144a, 144b, 144c, 144d which stack molded body storage containers 143 and store these inside the honeycomb molded body receiving apparatus 140, and also moves the molded body storage containers 143; a storage container lifting apparatus 145 which lifts up molded body storage containers 143 other than a single molded body storage container 143 when withdrawing the single molded body storage container 143 from the stacked molded body storage containers 143, or when stacking yet another molded body storage container 143 onto the stacked molded body storage containers 143 ; a storage container support apparatus 150 which supports the molded body storage container 143 when successively storing the treated honeycomb molded bodies 11 inside of the molded body storage container 143; a storage container moving apparatus 155 (see Fig. 2) which functions when moving only the bottom-most molded body storage container 143 in the stacked molded body storage containers 143; and a storage container elevator apparatus 149 which is able to ascend and descend with having a single or a plurality of the molded body storage containers 143 placed thereon.

As shown in Figs. 2 and 3, a belt conveyer 142 configured to have the treated honeycomb molded body 11 placed thereon and move the treated honeycomb molded body 11 to the honeycomb molded body receiving apparatus 140 is disposed in close proximity of the honeycomb molded body receiving apparatus 140. Also, the molded body storage container 143 has a rectangular shape when viewed from the top, and as shown in Figs. 1(a) and 4, it is provided with four gaps 143a on the portion of its side faces corresponding to its short sides in order to allow insertion of a member configured to lift up another molded body storage container 143 stacked on the top of the molded body storage container 143.

Here, first description will be given in regard to a case in which the molded body storage containers 143 stacked atop the belt conveyers 144a, 144b of the upper tier of the honeycomb molded body receiving apparatus 140 are empty and are not currently storing any treated honeycomb molded body 11, and the molded body storage containers 143 stacked atop the belt conveyers 144c, 144d of the lower tier of the honeycomb molded body receiving apparatus 140 are in a state of currently storing a regulated number of treated honeycomb molded bodies 11 within.
In this case, from the empty molded body storage containers 143 conveyed in from the outside and held in a state stacked atop the belt conveyers 144a, 144b, a single molded body storage container 143 is moved to a location at which there is disposed a storage container support apparatus 150, and at this location the treated honeycomb molded body 11 is stored into the interior of the molded body storage container 143. Afterward, the molded body storage container 143 is stacked atop the storage container elevator apparatus 149, after which the stacked body of molded body storage containers 143 is moved to and held on the belt conveyers 144c, 144d of the lower tier, and is then moved to a suitable storage area and stored.
Therefore, in a honeycomb molded body receiving apparatus 140 in which the molded body storage container is set into motion in this sort of direction, the belt conveyer 144b of the upper tier functions as a molded body pre-storage container induction portion, while the belt conveyer 144d functions as a molded body post-storage container taking-out portion.
The procedure by which the treated honeycomb molded body is placed within the molded body storage container 143 in this case will be explained in greater detail.

The empty molded body storage container 143 conveyed in from the outside and held on the belt conveyer 144b of the upper tier, which functions as the molded body pre-storage container induction portion, is conveyed by the belt conveyers 144a, 144b to the location occupied by the storage container lifting apparatus 145.

As shown in Fig. 1(b), Fig. 1(c), and Fig. 4, this storage container lifting apparatus 145 is comprised of a lifting portion 147 configured to directly lift up the molded body storage container 143, an air cylinder 146 for the purpose of moving the lifting portion 147 in the upward and downward directions, and a platform portion 148 configured to support the air cylinder 146, and is disposed on both sides sandwiching the path of the molded body storage container 143. Also, although not shown in the figures there is an air cylinder also disposed in the lifting portion 147, and it is configured in a manner enabling the lifting portion 147 to be moved in the horizontal direction.

When lifting up the molded body storage container 143, the lifting portion 147 of the storage container lifting apparatus 145 situated on both sides of the molded body storage container 143 is first moved in the horizontal direction, then the end of the lifting portion 147 is inserted into the gaps at the bottom-most portion of the stacked molded body storage containers 143, and the air cylinder 146 is driven to lift the lifting portion 147. According to this, all the molded body storage containers 143 of the second tier and above are lifted upwards thereby separating the bottom-most molded body storage container 143 from the molded body storage containers 143 of the second tier and above.

Next, the molded body storage container 143 is moved using the storage container moving apparatus 155. The storage container moving apparatus 155, as shown in Fig. 2 and Fig. 4, protrudes in the upward direction, and is comprised of a catch portion 157 configured to catch the molded body storage container 143 when moving in the direction of the molded body storage container 143, and a motor 156 and ball screw 158 configured to move the catch portion 157. The catch portion 157 screwed onto the ball screw 158 is configured in a manner able to move in the direction of the molded body storage container 143 or the reverse direction by driving the motor 156 and rotating the ball screw 158.

Therefore, the molded body storage container 143 is moved by first driving the motor 156, which thereby rotates the ball screw 158 to set the catch portion 157 into motion in the direction of the molded body storage container 143, and when the catch portion 157 reaches the molded body storage container 143, it catches the molded body storage container 143 and moves the molded body storage container 143 to the location between the two storage container support apparatuses 150 shown in Fig. 1(a). At this time, the belt conveyer 144a is also set into rotation to assist the movement of the molded body storage container 143.
Therefore, in a case of running the honeycomb molded body receiving apparatus 140 using this procedure, the storage container moving apparatus 155 functions as a first molded body storage container moving mechanism configured to move the above-mentioned empty molded body storage container in the horizontal direction and situate the above-mentionedmoldedbody storage container at a prescribed location.

As shown in Fig. 1 (d) and Fig. 1(e), the storage container support apparatus 150 is comprised of: a storage container support portion 152 which is for the purpose of supporting a molded body storage container 143 moved toward it; an air cylinder 151 which is for the purpose of moving the storage container support portion 152 in the direction nearing the molded body storage container 143 when supporting the molded body storage container 143, and alternately moving the storage container support portion 152 in the direction away from the molded body storage container 143 when releasing a supported molded body storage container 143; and a cylinder support portion 153 configured to support the air cylinder 151. As shown in Fig. 2, there are two units of the storage container support apparatuses 150 disposed on both sides of the region through which the molded body storage container 143 moves.

Also, the two storage container support apparatuses 150 maintain in advance two storage container support portions 152 at a prescribed space interval, which makes it possible to support a molded body storage container 143 when the molded body storage container 143 is moved to the storage container support apparatuses 150. Therefore, when a molded body storage container 143 is moved by the movement of the catch portion 157 to the location of the storage container support apparatuses 150, the storage container support apparatuses 150 support the molded body storage container 143 from both sides while driving the air cylinder 151 to further advance the storage container support portion 152 in the direction of the molded body storage container 143 to thereby hold the molded body storage container 143 firmly.

Next, according to the robotic arm 141, a treated honeycomb molded body 11 is placed within the interior of the molded body storage container 143 and stored.
This robotic arm 141 includes a gripper portion 141a comprised of a suction portion configured to carry out air suction (not shown) and a plate-shaped member used for holding in a sandwiching manner. Using the suction portion and the gripper portion 141a, the robotic arm 141 lifts up a treated honeycomb molded body 11 placed on a belt conveyer 142 and conveyed to it, and moves the robotic arm 141 to a molded body storage container 143 situated inside of the honeycomb molded body receiving apparatus 140. After that, the suction of the suction portion is halted and the gripper portion 141a is spread apart, and the treated honeycomb molded bodies 11 are placed inside the molded body storage container 143 sequentially.

Then, after placing the treated honeycomb molded bodies 11 in the entire interior of the molded body storage container 143 and the storage process of treated honeycomb bodies 11 has been completed, the storage container elevator apparatus 149 situated inbetween the two storage container support apparatuses 150 ascends and supports the molded body storage container 143. After this, the storage container support apparatuses 150 drive the air cylinder 151 to retract the storage container support portion 152 from the molded body storage container 143 thereby releasing the molded body storage container 143 from support. According to doing so, the molded body storage container 143 is set into a state in which it is supported only by the storage container elevator apparatus 149. After this, the storage container elevator apparatus 149 descends, which allows movement of a new molded body storage container 143 to the location between the two storage container support apparatuses 150.
Therefore, the storage container elevator apparatus 149 comes to function as a second molded body storage container.

According to repeating the above-mentioned process, molded body storage containers 143 having their interiors filled with a prescribed number of the treated honeycomb molded bodies 11 come to be stacked there atop the storage container elevator apparatus 149. When the number of the molded body storage containers 143 stacked on the storage container elevator apparatus 149 reaches a prescribed value (for example, 15 layers), the storage container elevator apparatus 149 descends to the bottom-most point of its movable range, and places the stacked molded body storage containers 143 there on the belt conveyer 144c. Next, according to driving the belt conveyer 144a, the stacked molded body storage containers 143 are set into motion, thereby securing a place to set down the next stacked body of molded body storage containers 143.

After this, the stacked molded body storage containers 143 are held on the belt conveyer 144c and the belt conveyer 144d, and are further set into motion according to the movement of the belt conveyers 144c, 144d successively toward the exit side. After this, the stacked molded body storage containers 143 are further moved to a suitable storage site outside of the honeycomb molded body receiving apparatus 140 where they are stored.
Also, in the honeycomb molded body receiving apparatus useable in the present invention, when placing the treated honeycomb molded body as in the manner of the honeycomb moldedbody receiving apparatus 140 running by the above-described procedure, it is preferable that the location where the empty molded body storage container 143 is to be situated is at the upper side with respect to the location where the molded body storage container 143 having the treated honeycomb molded body placed therein is tobe stacked.
This is because by configuring in such a manner, it is possible to design the honeycomb molded body receiving apparatus to be compact. Also, in a case in which the stacked molded body storage containers are situated at the lower side with respect to the empty molded body storage containers, since the distance over which the molded body storage container having the treated honeycomb molded body placed therein is to be moved is either small, or the molded body storage container need not be moved at all, the operation of conveying the molded body storage container is easy.

In the honeycomb molded body receiving apparatus 14 0 shown in Fig. 1 (a) and Figs. 2 to 4, since the storage container lifting apparatus 145 is also established at the lower tier, it is acceptable to carry out the process of stacking the molded body storage container 143 or the like at the lower tier as well.
Description will be put forth herein below regarding the operation procedure of the honeycomb molded body receiving apparatus 140 in such a case.
In a case in which the process of stacking the molded body storage container 143 is carried out at the lower tier, the treated honeycomb molded body is placed inside of the molded body storage container 143 supported by the storage container support apparatuses 150 in the same manner as the operation already described above, and this molded body storage container 143 is further supported by the storage container elevator apparatus 149.
Then, with the storage container elevator apparatus 149 in a state of supporting a single molded body storage container 143, the storage container elevator apparatus 149 is made to descend to the lowest point of its movable range, and place the molded body storage container 143 on the belt conveyer 144c. Afterward, the molded body storage container 143 is moved according to the belt conveyer 144c to a location in between the two storage container lifting apparatuses 145 of the lower tier.

Next, according to carrying out a process of the same fashion, the next molded body storage container 143 is placed onto the belt conveyer 144c and moved according to the movement of the belt conveyer 144c to a spot in between the two storage container lifting apparatuses 145.
At this time, the first conveyed molded body storage container 143 is lifted up by the storage container lifting apparatus 145 to a height enabling the next molded body storage container 143 to be moved in underneath.
Then, after having conveyed the second molded body storage container 143 by the belt conveyer 144c to a prescribed location, the first molded body storage container 143 is stacked there on top.
According to carrying out this kind of process repeatedly, it is possible to carry out the process of stacking the molded body storage container 143 on the lower tier.
Also, in this case as well, when a prescribed number of the molded body storage container 143 is stacked, the stacked body is sent out to the belt conveyer 144d side.
In a case of carrying out the process of stacking the molded body storage container with this kind of procedure, the storage container lifting apparatus 145 and the belt conveyer 144c of the lower tier come to function as second molded body storage container mechanisms.

According to using a honeycomb molded body receiving apparatus configured in this formation under the above-described procedure, it is possible to carry out the operation of placing the treated honeycomb molded body into the molded body storage container in an optimal manner.

Also, in the already described procedure, molded body storage containers are stacked on both the upper tier belt conveyer as well as the lower belt conveyer, the empty molded body storage containers being stacked on the upper tier belt conveyer while the molded body storage containers having the treated honeycomb molded bodies placed therein being stacked on the lower tier belt conveyer. However, the operation procedure of the honeycomb molded body receiving apparatus 140 of the present invention is not limited to a procedure in this formation, as it is also acceptable to realize the same according to a procedure such as that described below.

For example, it is also acceptable for the direction of movement of the molded body storage container 143 to be in the opposite direction.
To be more specific, first, with the belt conveyer 144d of the lower tier serving as the molded bodypre-storage container induction portion, the empty molded body storage container 143 stacked on the belt conveyers 144d, 144c of the lower tier are held in place, all molded body storage containers 143 except the bottom-most molded body storage container 143 are lifted up according to the storage container lifting apparatus 145 of the lower tier, and the bottom-most molded body storage container 143 is made to be supported by the storage container elevator apparatus 149 according to the movement of the belt conveyer 144c.
Next, the storage container elevator apparatus 149 is made to ascend, and the molded body storage container 143 is further supported by the storage container support apparatus 150, and the treated honeycomb molded body is placed inside of the molded body storage container 143 by the robotic arm 141.
Afterward, the molded body storage container 143 having the treated honeycomb molded body placed therein is placed on the belt conveyer 144a.

Then according to carrying out this process repeatedly, the molded body storage container 143 having the treated honeycomb molded body placed therein is placed on the belt conveyer 144a.
When stacking the molded body storage container 143 on the belt conveyer 144a, it is acceptable to conduct the stacking of the molded body storage container 143 on the belt conveyer 144a according to lifting up a previously conveyed-in molded body storage container 143 according to the storage container lifting apparatus 145 of the upper tier and successively sending in subsequent molded body storage container 143 underneath.
Moreover, when the number of stacked molded body storage containers 143 reaches a prescribed number, the stacked body of molded body storage containers 143 is further conveyed to the belt conveyer 144b. Therefore, in a case of placing the treated honeycomb molded body inside of the molded body storage container 143 under this sort of procedure, the belt conveyer 144b comes to function as a molded body post-storage container taking-out portion.
Also, under this sort of procedure, the belt conveyer 144c and the storage container elevator apparatus 149 come to function as first molded body storage container movement mechanisms while the belt conveyer 144a comes to function as a second molded body storage container movement mechanism.
In this manner, the honeycomb molded body receiving apparatus 140 shown in Fig. 1(a) and Figs. 2 to 4 can be used in a manner in which the empty molded body storage containers are stacked there on the conveyer belt of the lower tier while the molded body storage containers storing the molded bodies are stacked there on the conveyer belt of the upper tier.

Also, for example, in the honeycomb molded body receiving apparatus 140 shown in Fig. 1 (a) and Figs. 2 to 4, when moving a stack of empty molded body storage containers 143 held on the belt conveyer 144a to the storage container support apparatus 150, although the bottom-most situated molded body storage container 143 among a stack of empty molded body storage containers 143 on the belt conveyer 144a is successively moved to the storage container support apparatus 150, it is also acceptable for the honeycomb molded body receiving apparatus useable in the present invention to be configured in a manner in which when moving a stack of empty molded body storage containers 143 on the belt conveyer 144a to the storage container support apparatus 150, the top-most situated molded body storage container 143 among a stack of empty molded body storage containers 143 on the belt conveyer 144a is successively moved to the storage container support apparatus 150.
In such a case, for example, it is acceptable to include a robotic arm configured to move the top-most situated molded body storage container 143 among a stack of empty molded body storage containers 143 on the belt conveyer 144a to the storage container support apparatus 150.

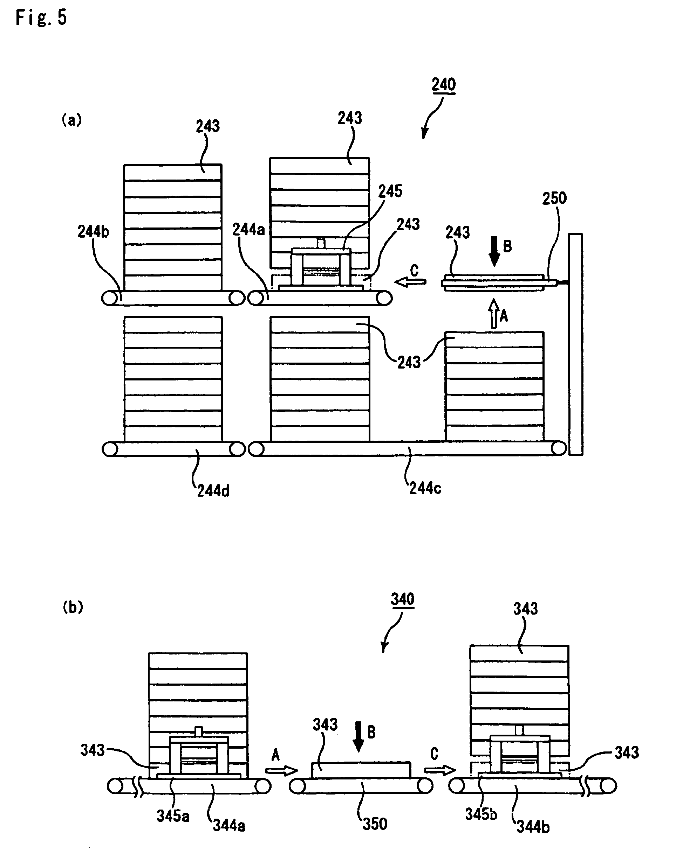

Also, aside from that, it is acceptable for the honeycomb molded body receiving apparatus useable in the present invention to have a configuration as shown in Figs. 5(a) and 5(b).
Figs. 5 (a) and 5 (b) are descriptive figures for the purpose of describing the other configuration of the honeycomb molded body receiving apparatus useable in the present invention.
In a honey comb molded body receiving apparatus 240, stacked empty molded body storage containers are held on a belt conveyer 244d and a belt conveyer 244c of the lower tier, while molded body storage containers having the treated honeycomb molded bodies placed therein are held on a belt conveyer 244a and a belt conveyer 244b of the upper tier.

In the honeycomb moldedbody receiving apparatus 24 0 , first, an empty molded body storage container conveyed in from the outside is held in a stacked state on the belt conveyers 244d, 244c of the lower tier.
And in this honeycomb molded body receiving apparatus 240, the belt conveyer 244d comes to function as a molded body pre-storage container induction portion.

Then, when receiving a treated honeycomb molded body, the top-most situated molded body storage container of among a stack of empty molded body storage containers stacked on the belt conveyer 244c of the lower tier is lifted up to a prescribed location according to the storage container support apparatus 250 [see the white arrow A in Fig. 5(a)].
Then, in the honeycomb molded body receiving apparatus 240, the storage container support apparatus 250 moves an empty molded body storage container 243 in the upward and downward direction to function as a first molded body storage container movement mechanism configured to situate the molded body storage container 243 at a prescribed location.
Next, according to a robotic arm not shown in the figures, a treated honeycomb molded body placed on a conveyer member not shown in figures is placed inside of a molded body storage container supported by the storage container support apparatus 250 [see the black arrow B in Fig. 5(a)].

Next, the molded body storage container storing inside of it the treated honeycomb molded body is moved on the belt conveyer 244a and the molded body storage container storing inside of it the treated honeycomb molded body on the belt conveyer 244a is then stacked [see the white arrow C in Fig. 5(a)].
At this time, at the belt conveyer 244a side, in order that the molded body storage container storing inside of it the treated honeycomb molded body may be placed at the bottom-most layer, an already stackedmolded body storage container is lifted up and out of the way according to a storage container lifting apparatus 245.
Therefore, in the honeycomb molded body receiving apparatus 240, the belt conveyer 244a and the storage container lifting apparatus 245 come to function as second molded body storage container movement mechanisms.

In this manner, atop the belt conveyer 244a, the molded body storage containers storing inside of them the treated honeycomb molded bodies are successively stacked, and when the number of the stacked molded body storage containers reaches a prescribed value, the stacked molded body storage containers are moved on the belt conveyer 244b of the upper tier, and further conveyed out to the outside.
Therefore, in the honeycomb molded body receiving apparatus 240, the belt conveyer 244b functions as a molded body post-storage container taking-out portion.
And in Fig. 5 (a), the white arrows indicate the movement of the molded body storage container, while the black arrows indicate the movement of the treated honeycomb molded body.

When placing the treated honeycomb molded body as in the manner of the honeycomb molded body receiving apparatus 240 shown in Fig. 5(a), it is preferable for the location of placement of the molded body storage container 243 in the honeycomb molded body receiving apparatus useable in the present invention to be at the upper side with respect to the location at which the empty molded body storage containers 243 are to be stacked.
This is because by configuring in such a manner, it is possible to design the honeycomb molded body receiving apparatus to be compact. Also, in a case in which the stacked molded body storage containers are situated at the lower side with respect to the empty molded body storage containers, since the distance over which the molded body storage container having the treated honeycomb molded body placed therein is to be moved is either small, or the molded body storage container need not be moved at all, the operation of conveying the molded body storage container is easy.

Also, in a honeycomb molded body receiving apparatus 340 shown in Fig. 5(b), a belt conveyer 344a holding a stack of empty molded body storage containers and a belt conveyer 344b holding a stack of molded body storage container storing the treated honeycomb molded body are not disposed respectively on upper and lower tiers as in the honeycomb molded body receiving apparatus shown in Fig. 1(a), Figs. 2 to 4 and Fig. 5(a), but the belt conveyers 344 a, 344b are formed on the same plane with each other.

In the honeycomb molded body receiving apparatus 340, first, empty molded body storage containers conveyed in from the outside are held in a stacked state on the belt conveyer 344a.
Then, when receiving the treated honeycomb molded body, all molded body storage containers of among the empty molded body storage containers 343 stacked on the belt conveyer 344a except the bottom-most molded body storage container 343 are lifted up according to the storage container lifting apparatus 345a, and the bottom-most molded body storage container 343 is then situated on [see the white arrow A in Fig. 5(b)] a belt conveyer 350.
In the honeycomb molded body receiving apparatus 340, the belt conveyer 350, in the same formation as the storage container support apparatuses 150, 250 of the honeycomb molded body receiving apparatuses 140, 240, respectively, has a function of supporting the molded body storage container when holding the treated honeycomb molded body inside of the molded body storage container.

Next, the treated honeycomb molded body placed on a conveyer member not shown in the figures is placed according to a robotic arm not shown in the figures within the molded body storage container that has been situated on the belt conveyer 350 [see the black arrow B in Fig. 5(b)).

Next, the molded body storage container in which the treated honeycomb molded body has been stored is then moved on the belt conveyer 344b and is stacked with the molded body storage containers 343 storing treated honeycomb molded bodies on the belt conveyer 344b [see the white arrow C in Fig. 5(b)].
At this time, on the belt conveyer 344b side, the stack of molded body storage containers already storing treated honeycomb molded bodies is lifted up according to a storage container lifting apparatus 345b in order that the incoming molded body storage container storing the treated honeycomb molded body may be stacked at the bottom-most location.
In this manner, on the belt conveyer 344b, the molded body storage containers storing inside of them the treated honeycomb molded bodies are successively stacked, and when the number of the stacked molded body storage containers reaches a prescribed value, the stacked molded body storage containers are conveyed out to the outside.
In Fig. 5(b), the white arrows indicate the movement of the molded body storage container, while the black arrows indicate the movement of the treated honeycomb molded body.

It should be noted that, in the honeycomb molded body receiving apparatus 340 shown in Fig. 5(b), the belt conveyer 344a functions as a molded body pre-storage container induction portion while the belt conveyer 344b functions as a molded body post-storage container taking-out portion.
Also, in the honeycomb molded body receiving apparatus 340, the belt conveyer 344a and the belt conveyer 350 both function as first molded body storage container movement mechanisms, while the belt conveyer 344b and the storage container lifting apparatus 345b function as second molded body storage container movement mechanisms.
It is acceptable for the honeycomb molded body receiving apparatus useable in of the present invention to have a configuration such as shown in Fig. 5(a) and Fig. 5(b).

In this kind of molded body receiving apparatus, since the process of placing the treated honeycomb molded body into the molded body storage container is configured to be carried out automatically, it is possible to carry out placement of the treated honeycomb molded body into the molded body storage container efficiently and without manual effort (manual working).

Next, description will be given in regard to the honeycomb molded body taking-out apparatus as useable in the present invention
The honeycomb molded body taking-out apparatus useable in the present invention used when taking out the treated honeycomb molded body from the molded body storage container in the method for manufacturing a honeycomb structured body according to the present invention, comprises :
a molded body post-storage container induction portion configured to stack and hold the molded body storage container having the treated honeycomb molded body placed therein;
a third molded body storage container movement mechanism configured to move the molded body storage container having the treated honeycomb molded body placed therein in the upward/downward direction and/or the horizontal direction to situate the molded body storage container in a prescribed location;
a robotic arm configured to lift up and move the treated honeycomb molded body placed in the molded body storage container by using a holding portion, and place the treated honeycomb molded body on a conveyer portion;
a fourth molded body storage container movement mechanism configured to stack the empty molded body storage container having the treated honeycomb molded body taken out therefrom onto another empty molded body storage container; and
a molded body pre-storage container taking-out portion configured to stack and hold the empty molded body storage container.

Although the honeycomb molded body taking-out apparatus as useable in the present invention is an invention involves an apparatus configured to take out a treated honeycomb molded body from within a molded body storage container, this honeycomb molded body taking-out apparatus is an apparatus configured to carry out the complete opposite operation of the honeycomb molded body receiving apparatus useable in the present invention already put forth herein above. Aside from the point of the direction of movement of the treated honeycomb molded body in the honeycomb molded body taking-out apparatus being the complete opposite of that in the honeycomb molded body receiving apparatus, since the conveyance direction and the like of the molded body storage container is identical to that in the above-mentioned honeycomb molded body receiving apparatus, it is possible to use the same apparatus to implement operation.
More specifically, the honeycomb molded body taking-out apparatus useable in the present invention comprises a robotic arm having a suction mechanism and a gripping mechanism, and third and fourth molded body storage container movement mechanisms. However, here, the robotic arm has a configuration identical to the robotic arm in the honeycomb molded body receiving apparatus as used in of the present invention, and the third and fourth molded body storage container movement mechanisms of the honeycomb molded body taking-out apparatus each has a configuration identical to the first and second molded body storage container movement mechanisms of the honeycomb molded body receiving apparatus as used in the present invention, respectively.

So, in the honeycomb molded body taking-out apparatus useable in the present invention, the molded body pre-storage container induction portion in the honeycomb molded body receiving apparatus as useable in the present invention functions as a molded body post-storage container induction portion, while the molded body post-storage container taking-out portion in the honeycomb molded body receiving apparatus as useable in the present invention functions as a molded body pre-storage container taking-out portion.

Here, using a case of using an apparatus identical to the honeycomb molded body receiving apparatus 140 shown in Fig. 1(a) and Figs. 2 to 4 as the honeycomb molded body taking-out apparatus as an example, description will be given in regard to the procedure used to take out a treated honeycomb molded body using the honeycomb molded body taking-out apparatus.
The symbols used in the Fig. 1(a) and Figs. 2 to 4 will also be used here in this example.
Also, here, description is carried out using a case of stacking and holding molded body storage containers having treated honeycomb molded bodies placed therein on a belt conveyer of an upper tier, and stacking and holding empty molded body storage containers having the treated honeycomb molded bodies taken out therefrom on a belt conveyer of a lower tier.

In a case of using the honeycomb molded body receiving apparatus 140 as the honeycomb molded body taking-out apparatus, the molded body storage container having the treated honeycomb molded body placed therein is conveyed in a stacked state on the belt conveyer 144b of the upper tier, and is further conveyed to the location of the storage container lifting apparatus 145 on the belt conveyer 144a of the upper tier.
Then, all molded body storage containers 143 except for the bottom-most molded body storage container 143 are lifted up, and the bottom-most molded body storage container 143 is then moved according to the storage container moving apparatus 155 and supported by the storage container support apparatus 150.

Next, the treated honeycomb molded body 11 inside of the molded body storage container 143 supported by the storage container support apparatus 150 is taken out by the robotic arm 141, and the taken-out treated honeycomb molded body 11 is then moved on the belt conveyer 142. The treated honeycomb molded body 11 is now ready to be conveyed to an apparatus of a subsequent process according to the belt conveyer 142.
On the other hand, the molded body storage containers 143 made empty by having the treated honeycomb molded body taken-out therefrom are stacked in succession atop the storage container elevator apparatus 149. When the number of stacked empty molded body storage containers 143 reaches a prescribed value, the stack of moldedbody storage containers 143 is moved on the belt conveyer 144c and further conveyed on the belt conveyer 144d where after it is conveyed out to the outside of the apparatus.
In a case using an apparatus identical to the honeycomb molded body receiving apparatus 140 shown in Fig. 1 (a) and Figs. 2 to 4 as the honeycomb molded body taking-out apparatus, it is possible to take out the treated honeycomb molded body from the molded body storage container using the above-mentioned procedure for example.

In a case using an apparatus identical to the honeycomb molded body receiving apparatus 140 as the honeycomb molded body taking-out apparatus, it is of course acceptable to carry out the stacking of the molded body storage container on the belt conveyer 144c of the lower tier, and also, it is acceptable after situating the molded body storage containers having the treated honeycomb molded bodies placed therein on the belt conveyers 144c, 144d of the lower tier and taking out the treated honeycomb molded bodies with the robotic arm, to hold the empty molded body storage containers there on the belt conveyer 142 of the upper tier.

It is also acceptable for the honeycomb molded body taking-out apparatus useable in the present invention to be an apparatus configured identical to a honeycomb molded body receiving apparatus useable in the present invention other than the honeycomb molded body receiving apparatus 140, such as the honeycomb molded body receiving apparatus 240, or the honeycomb molded body receiving apparatus 340 shown in Figs. 5(a) and 5(b).

It is desirable that in the honeycomb molded body receiving apparatus useable in the present invention, the location at which the above-mentioned molded body storage container is situated is at the upper side with respect to the location at which the above-mentioned empty molded body storage container is to be stacked when lifting the above-mentioned treated honeycomb molded body by using the holding portion.
This is because by configuring in this manner, it is possible to design the honeycomb molded body taking-out apparatus to be compact. Also, in a case in which the stacked molded body storage containers are situated at the lower side with respect to the molded body storage containers, since the distance over which the molded body storage container having the treated honeycomb molded body placed therein is to be moved is either small, or the molded body storage container need not be moved at all, the operation of conveying the molded body storage container is easy.

Also, it is desirable that in the honeycomb molded body receiving apparatus useable in the present invention, the location at which the above-mentioned molded body storage container is situated is at the upper side with respect to the location at which the above-mentioned stacked molded body storage containers having the treated honeycomb molded bodies placed therein are to be held when lifting the above-mentioned treated honeycomb molded body by using the holding portion.
This, also, is because by configuring in this manner, it is possible to design the honeycomb molded body taking-out apparatus to be compact. Also, in a case in which the stacked molded body storage containers are situated at the lower side with respect to the molded body storage containers, since the distance over which the molded body storage container having the treated honeycomb molded body placed therein is to be moved is either small, or the molded body storage container need not be moved at all, the operation of conveying the molded body storage container is easy.
With this kind of honeycomb molded body taking-out apparatus, since the process of taking out the treated honeycomb molded body from the molded body storage container is carried out automatically, it is possible to carry out removal of the treated honeycomb molded body from the molded body storage container efficiently and without manual effort (manual working).
Inaddition, conveyers of a honeycomb molded body receiving apparatus and a honeycomb molded body taking-out apparatus are not limited to belt-conveyers, and may be chain conveyers, roller conveyers, pallet conveyers, and the like.

### EXAMPLES

The description of the present invention will be given in further detail with examples below. However, the present invention is not limited to only these examples.

### (Example 1)

(1) 250 kg of α-type silicon carbide powder having an average particle diameter of 10 µm, 100 kg of α-type silicon carbide powder having an average particle diameter of 0.5 µm, and 20 kg of organic binder (methylcellulose) were blended together to prepare a powder mixture.
   Next, 12 kg of lubricating agent (UNILUB, Manufactured by NOF Corp.), 5 kg of plasticizer (glycerin), and 65 kg of water were blended in a separate container to prepare a liquid mixture. Next, using a wet mixer, the powder mixture and the liquid mixture were blended together, thereby preparing the moist mixture.

Next, using a conveyer, the moist mixture was conveyed to the extrusion molding machine and inducted into a raw material induction port of the extrusion molding machine.
Then, a honeycomb molded body having a shape identical to that shown in Fig. 7(a), except that the end portion of the cells are not yet plugged, is produced according to carrying out cutting of the extruded molded body.

(2) Next, the above-mentioned honeycomb molded body was dried using a drying apparatus combining microwaves and hot air.
   Afterward, the honeycomb molded body on which the drying treatment has been carried out was placed into a molded body storage container using the honeycomb molded body receiving apparatus 140 shown in Fig. 1(a) and Figs. 2 to 4, and stored for approximately one week.
   Afterward, using a honeycomb molded body taking-out apparatus having the same configuration as the honeycomb molded body receiving apparatus 140, the dried honeycomb molded body that underwent storage was taken out and conveyed to a subsequent process.

(3) Next, a plug material paste having the same composition as the above-mentionedmoist composite was filled into prescribed cells of the honeycomb molded body in a fashion in which the plug material paste is filled into either end portion of the cells.
   Next, the filled plug material paste was dried according to irradiating both end faces of the honeycomb molded body with hot air at a temperature of 130°C.

(4) Next, the honeycomb molded body which has had the plug material paste filled into its cells was carried into a degreasing furnace where degreasing treatment was carried out on it.
   Here, the degreasing conditions were set to 400°C for a 3-hour time period.

(5) Next, the degreased honeycomb molded body is carried into a firing furnace, where firing treatment was carried out.
   Here the firing conditions were a 2200°C argon atmosphere at atmospheric pressure for a 3-hour time period.
   According to this kind of firing treatment, a honeycomb fired body made aroma silicon carbide fired body havingaporosity of 40%, an average pore diameter of 12.5 µm, a size of 34.3 mm × 34.3 mm × 254 mm, with the number of cells (cell density) of 46.5 pcs/cm², and a cell wall thickness of 0.25 mm was produced.

(6) Next, using a thermal resistant sealing material paste having 30% by weight of alumina fiber having an average fiber length of 20µm, 21% by weight of silicon carbide granule with an average particle diameter of 0.6µm, 15% by weight of silica sol, 5.6% by weight of carboxy methylcellulose, and 28.4% by weight of water, a multitude of the honeycomb fired bodies was adhered to one another and further dried at a temperature of 120°C to produce a honeycomb aggregated body.
   Here, the thickness of the sealing material layer (the adhesive layer) was set to 1.0 mm.

(7) Next, a cylindrical shapedhoneycombblock was produced according to cutting the outer circumference of the honeycomb aggregated body using a diamond cutter.

(8) Next, a sealing material paste was prepared by mixing and kneading together a mixture of 23.3% by weight of silica aluminum fiber (average fiber length 100 µm, average fiber diameter 10 µm) as an inorganic fiber, 30.2% by weight of silicon carbide powder having an average particle diameter of 0.3 µm as an inorganic particle, 7% by weight of silica sol (SiO₂ content within the sol: 30% by weight) as an inorganic binder, 0.5% by weight of carboxy methylcellulose as an organic binder, and 39% by weight of water.

Afterward, using the above-mentioned sealing material paste, a sealing material paste layer having a thickness of 0.2mm was formed over the outer circumference portion of the honeycomb block. This sealing material paste layer was then dried under a temperature of 120°C to produce a cylindrical shaped honeycomb structured body having a sealing material layer (the coat layer) of 143.8mm in diameter × 254mm in length formed over the outer circumference.

### (Example 2)

The honeycomb structured body was produced in a manner identical to the Example 1 aside from points of: not having had temporarily stored the honeycomb molded body after carrying out drying in the process (2) of the Example 1 and proceeding to carry out the subsequent process; after having completed the above-mentioned process (3), placing the honeycomb molded body in which the plug material paste has been filled and the drying has been carried out thereon inside of the molded body storage container using the honeycomb molded body receiving apparatus 140 shown in Fig. 1(a) and Figs. 2 to 4 and thereby storing the honeycomb molded body for approximately 1 week; and taking out the honeycomb molded body that has been dried and stored using a honeycomb molded body taking-out apparatus having the same configuration as the honeycomb molded body receiving apparatus 140 and conveying to a subsequent process.

### (Example 3)

The honeycomb structured body was produced in a manner identical to the Example 1 aside from points of: not having had temporarily stored the honeycomb molded body after carrying out drying in the process (2) of the Example 1 and thus proceeding to carry out the subsequent process; after having completed the above-mentioned process (5), placing the honeycomb molded body on which the firing treatment was carried out (honeycomb fired body) inside of the molded body storage container using the honeycomb molded body receiving apparatus 140 shown in Fig. 1(a) and Figs. 2 to 4 and thereby storing the honeycomb molded body for approximately 1 week; and taking out the honeycomb fired body that has been stored using a honeycomb molded body taking-out apparatus having the same configuration as the honeycomb molded body receiving apparatus 140 and conveying to a subsequent process.

The honeycomb structured body produced using the methods of the Examples 1 to 3 was one exhibiting a quality identical to that of the honeycomb structured body produced according to common methods (i.e. methods carrying out continuous conveyance without temporary storage).

### BRIEF DESCRIPTION OF THE DRAWINGS

Fig. 1(a) is a frontal view schematically showing a honeycomb molded body receiving apparatus useable in the present invention.
Fig. 1(b) is a frontal view showing a storage container lifting apparatus comprising the honeycomb molded body receiving apparatus shown in Fig. 1(a).
Fig. 1(c) is a side view of the storage container lifting apparatus shown in Fig. 1(b).
Fig. 1(d) is a plan view of a storage container support apparatus comprising the honeycomb molded body receiving apparatus shown in Fig. 1(a).
Fig. 1(e) is a side view of the storage container support apparatus shown in Fig. 1(d).
Fig. 2 is a plan view of the honeycomb molded body receiving apparatus shown in Fig. 1(a).
Fig. 3 is a side view of the honeycomb molded body receiving apparatus shown in Fig. 1(a)
Fig. 4 is an enlarged perspective view showing a close up of the storage container lifting apparatus and a storage container moving apparatus comprising the honeycomb molded body receiving apparatus shown in Fig. 2.
Figs. 5(a) and 5 (b) are descriptive figures for the purpose of describing another configuration of the honeycomb molded body receiving apparatus useable in the present invention.
Fig. 6 is a perspective view schematically showing an example of a honeycomb structured body.
Fig. 7 (a) is a perspective view schematically showing a honeycomb fired body comprising a honeycomb structured body.
Fig. 7(b) is an A-A line cross-sectional view of Fig. 7 (a).

### EXPLANATION OF SYMBOLS

140, 240, 340 Honeycomb Molded Body Receiving Apparatus
141 Robotic Arm
142 Belt Conveyer
143, 243, 343 Molded Body Storage Container
144a, 244a, 344a Belt Conveyer
144b, 244b, 344b Belt Conveyer
144c, 244c Belt Conveyer
144d, 244d Belt Conveyer
145, 245, 345a, 345b Storage Container lifting Apparatus
146 Air Cylinder
147 Lifting Portion
148 Platform Portion
149 Storage Container Elevator Apparatus
150, 250 Storage Container Support Apparatus
151 Air Cylinder
152 Storage Container Support Portion
153 Cylinder Support Portion
350 Belt Conveyer

## Claims

1. A method for manufacturing a honeycomb structured body including a honeycomb fired body, comprising:
producing a pillar-shaped honeycomb molded body (11) in which a plurality of cells are placed in parallel with one another in a longitudinal direction with a cell wall therebetween by molding a ceramic raw material;
producing a honeycomb fired body by carrying out at least a drying treatment and a firing treatment on said honeycomb molded body (11) after producing said honeycomb molded body; **characterised in that**
placing said honeycomb molded body (11) on which said drying treatment and/or the firing treatment is carried out into a molded body storage container (143) so as to temporarily store said treated honeycomb molded body in said molded body storage container (143);
taking out said treated honeycomb molded body (11) placed in the molded body storage container (143) from the molded body storage container (143); and
conveying said taken-out and treated honeycomb molded body (11) to a subsequent process;
wherein
in the temporarily storing of said treated honeycomb molded body, a molded body pre-storage container induction portion (144b, 244d, 344a) stacks and holds an empty molded body storage container; a first molded body storage container movement mechanism (145) moves said empty molded body storage container in the upward/downward direction and/or the horizontal direction to situate said empty molded body storage container in a prescribed location;
a robotic arm (141) lifts up and moves the treated honeycomb molded body situated atop a conveyer portion (142) using a holding portion, and places said treated honeycomb molded body inside of the empty molded body storage container situated in said prescribed location;
a second molded body storage container movement mechanism (149) stacks the molded body storage container having said treated honeycomb molded body placed therein onto a molded body storage container having another treated honeycomb molded body placed therein, and
a molded body post-storage container taking-out portion (144d, 244b, 344b) stacks and holds the molded body storage container having said treated honeycomb molded body placed therein.

2. The method for manufacturing a honeycomb structured body according to claim 1,
further comprising
carrying out at least an opening-sealing treatment, after having produced said honeycomb molded body,
said treated and temporarily stored honeycomb molded body being a honeycomb molded body on which the drying treatment is carried out, a honeycomb molded body on which the drying treatment and the opening-sealing treatment are carried out, or a honeycomb molded body on which the drying treatment, the opening-sealing treatment and the firing treatment are carried out.

3. The method for manufacturing a honeycomb structured body according to claim 1 or 2,
wherein
a location where said first molded body storage container movement mechanism is to situate said empty molded body storage container, when placing said treated honeycomb molded body therein, is at the upper side with respect to a location where the molded body storage container having said treated honeycomb molded body placed therein is to be stacked.

4. The method for manufacturing a honeycomb structured body according to claim 1 or 2,
wherein
a location where said first molded body storage container movement mechanism is to situate said empty molded body storage container, is at the upper side with respect to a location where said molded body storage container induction portion is to stack and hold said empty molded body storage container.

5. A method for manufacturing a honeycomb structured body including a honeycomb fired body, comprising:
producing a pillar-shaped honeycomb molded body (11) in which a plurality of cells are placed in parallel with one another in a longitudinal direction with a cell wall therebetween by molding a ceramic raw material;
producing a honeycomb fired body by carrying out at least a drying treatment and a firing treatment on said honeycomb molded body (11) after producing said honeycomb molded body; **characterised in that**
temporarily storing said honeycomb molded body (11) on which said drying treatment and/or the firing treatment is carried out in a molded body storage container (143),
taking out said treated honeycomb molded body (11), which has been placed in said molded body storage container (143) so as to be temporarily stored in said molded body storage container (143), from said molded body storage container (143); and
conveying the taken-out and treated honeycomb molded body (11) to a subsequent process;
wherein
in said taking out of said treated honeycomb molded body, a molded body post-storage container induction portion (144b, 244d, 344a) stacks and holds the molded body storage container (143) having said treated honeycomb molded body (11) placed therein,
a third molded body storage container movement mechanism (145) moves the molded body storage container having said treated honeycomb molded body placed therein in the upward/downward direction and/or the horizontal direction to situate said molded body storage container in a prescribed location,
a robotic arm (141) lifts up and moves the treated honeycomb molded body placed in said molded body storage container by using a holding portion, and places said treated honeycomb molded body atop a conveyer portion (142),
a fourth molded body storage container movement mechanism (149) stacks the empty molded body storage container having said treated honeycomb molded body taken out therefrom onto another empty molded body storage container, and
a molded body pre-storage container taking-out portion (144d, 244b, 344b) stacks and holds said empty molded body storage container.

6. The method for manufacturing a honeycomb structured body according to claim 5,
wherein
a location where said third molded body storage container movement mechanism is to situate said molded body storage container having said treated honeycomb molded body placed therein, when said robotic arm lifts up said treated honeycomb molded body by using the holding portion, is at the upper side with respect to a location where said fourth molded body storage container movement mechanism is to stack said empty molded body storage container.

7. The method for manufacturing a honeycomb structured body according to claim 5,
wherein
a location where said third molded body storage container movement mechanism is to situate said molded body storage container having said treated honeycomb molded body placed therein, when said robotic arm lifts up said treated honeycomb molded body by using a holding portion, is at the upper side with respect to a location where said molded body storage container induction portion is to stack and hold a molded body storage container having said treated honeycomb molded body placed therein.

## Patentansprüche

1. Verfahren zur Herstellung eines Wabenstrukturkörpers, der einen gebrannten Wabenkörper enthält, umfassend:
Herstellen eines säulenförmigen ausgeformten Wabenkörpers (11), in dem eine Mehrzahl von Zellen parallel zueinander in einer Längsrichtung mit einer Zellwand dazwischen angeordnet ist, durch Ausformen eines keramischen Rohmaterials;
Herstellen eines gebrannten Wabenkörpers durch Ausführen wenigstens einer Trocknungsbehandlung und einer Brennbehandlung an dem ausgeformten Wabenkörper (11), nachdem der ausgeformte Wabenkörper hergestellt ist;
**gekennzeichnet, durch**
Anordnen des ausgeformten Wabenkörpers (11), an dem die Trocknungsbehandlung und/oder die Brennbehandlung ausgeführt ist, in einem Lagerungsbehälter des ausgeformten Körpers (143), um den behandelten ausgeformten Wabenkörper in dem Lagerungsbehälter des ausgeformten Körpers (143) vorläufig zu lagern;
Herausnehmen des behandelten ausgeformten Wabenkörpers (11), der in dem Lagerungsbehälter des ausgeformten Körpers (143) angeordnet ist, aus dem Lagerungsbehälter des ausgeformten Körpers (143); und
Transportieren des herausgenommenen und behandelten ausgeformten Wabenkörpers (11) an einen nachfolgenden Prozess; wobei
bei dem vorläufigen Lagern des behandelten ausgeformten Wabenkörpers ein Vorlagerungsbehälter-Zuführungsabschnitt des ausgeformten Körpers (144b, 244b, 344a) einen leeren Lagerungsbehälter des ausgeformten Körpers stapelt und hält, wobei ein erster Lagerungsbehälter-Bewegungsmechanismus des ausgeformten Körpers (145) den leeren Lagerungsbehälter des ausgeformten Körpers in der Hoch-/Runterichtung und/oder der horizontalen Richtung bewegt, um den leeren Lagerungsbehälter des ausgeformten Körpers an einem vorgeschriebenen Ort unterzubringen,
ein Roboterarm (144) den behandelten ausgeformten Wabenkörper, der auf einem Transportabschnitt (142) unter Verwendung eines Halteabschnitts positioniert ist, hochhebt und bewegt, und den behandelten ausgeformten Wabenkörper in dem leeren Lagerungsbehälter des ausgeformten Körpers anordnet, der an dem vorgeschriebenen Ort untergebracht ist,
ein zweiter Lagerungsbehälter-Bewegungsmechanismus des ausgeformten Körpers (149) den Lagerungsbehälter des ausgeformten Körpers, in dem der behandelte ausgeformte Wabenkörper angeordnet ist, auf einem Lagerungsbehälter des ausgeformten Körpers, in dem ein weiterer behandelter ausgeformter Wabenkörper angeordnet ist, stapelt, und
ein Nachlagerungsbehälter-Herausnahmeabschnitt des ausgeformten Körpers (144d, 244b, 344b) den Lagerungsbehälter des ausgeformten Körpers, in dem der behandelte ausgeformte Wabenkörper angeordnet ist, stapelt und hält.

2. Verfahren zur Herstellung eines Wabenstrukturkörpers nach Anspruch 1, ferner umfassend
Ausführen wenigstens einer Öffnungsdichtungsbehandlung, nach der Herstellung des ausgeformten Wabenkörpers,
wobei der behandelte und vorläufig gelagerte ausgeformte Wabenkörper ein ausgeformter Wabenkörper, an dem die Trocknungsbehandlung ausgeführt ist, ein ausgeformter Wabenkörper, an dem die Trocknungsbehandlung und die Öffnungsdichtungsbehandlung ausgeführt sind, oder ein ausgeformter Wabenkörper ist, an dem die Trocknungsbehandlung, die Öffnungsdichtungsbehandlung und die Brennbehandlung ausgeführt sind.

3. Verfahren zur Herstellung eines Wabenstrukturkörpers nach Anspruch 1 oder 2, bei dem
ein Ort, an dem der erste Lagerungsbehälter-Bewegungsmechanismus des ausgeformten Körpers den leeren Lagerungsbehälter des ausgeformten Körpers unterzubringen hat, wenn der behandelte ausgeformte Wabenkörper darin angeordnet ist, sich auf der oberen Seite bezüglich eines Orts befindet, wo der Lagerungsbehälter des ausgeformten Körpers, in dem der behandelte ausgeformte Wabenkörper angeordnet ist, zu stapeln ist.

4. Verfahren zur Herstellung eines Wabenstrukturkörpers nach Anspruch 1 oder 2, bei dem
ein Ort, wo der erste Lagerungsbehälter-Bewegungsmechanismus des ausgeformten Körpers den leeren Lagerungsbehälter des ausgeformten Körpers unterzubringen hat, sich auf der oberen Seite bezüglich eines Orts befindet, wo der Lagerungsbehälter-Zuführabschnitt des ausgeformten Körpers, den leeren Lagerungsbehälter des ausgeformten Wabenkörper zu stapeln und zu halten hat.

5. Verfahren zur Herstellung eines Wabenstrukturkörpers, der einen gebrannten Wabenkörper enthält, umfassend:
Herstellen eines säulenförmigen ausgeformten Wabenkörpers (11), in dem eine Mehrzahl von Zellen parallel zueinander in einer Längsrichtung mit einer Zellwand dazwischen angeordnet ist, durch Ausformen eines keramischen Rohmaterials;
Herstellen eines gebrannten Wabenkörper durch Ausführen wenigstens einer Trocknungsbehandlung und einer Brennbehandlung an dem ausgeformten Wabenkörper (11), nach der Herstellung des ausgeformten Wabenkörpers; **gekennzeichnet durch**
vorläufiges Lagern des ausgeformten Wabenkörper (11), an dem die Trocknungsbehandlung und/oder die Brennbehandlung ausgeführt ist, in einem Lagerungsbehälter des ausgeformten Körpers (143),
Herausnehmen des behandelten ausgeformten Wabenkörpers (11), der in dem Lagerungsbehälter des ausgeformten Körpers (143) angeordnet wurde, um in dem Lagerungsbehälter des ausgeformten Körpers (143) vorläufig gelagert zu werden, aus dem Lagerungsbehälter des ausgeformten Körpers (143); und
Transportieren des herausgenommenen und behandelten ausgeformten Wabenkörpers (11) an einen nachfolgenden Prozess; wobei
beim Herausnehmen des behandelten ausgeformten Wabenkörpers (11) ein Nachlagerungsbehälter-Zuführabschnitt des ausgeformten Körpers (144b, 244d, 344a) den Lagerungsbehälter des ausgeformten Körpers (143), in dem der behandelte ausgeformte Wabenkörper (11) angeordnet ist, stapelt und hält,
ein dritter Lagerungsbehälter-Bewegungsmechanismus des ausgeformten Körpers (144) den Lagerungsbehälter des ausgeformten Körpers, in dem der behandelte ausgeformte Wabenkörper angeordnet ist, in der Hoch-/Runterrichtung und/oder der horizontalen Richtung bewegt, um den Lagerungsbehälter des ausgeformten Körpers an einer vorgeschriebenen Position unterzubringen,
ein Roboterarm (141) den behandelten ausgeformten Wabenkörper, der in dem Lagerungsbehälter des ausgeformten Körpers angeordnet ist, unter Verwendung eines Halteabschnitts anhebt und bewegt und den behandelten ausgeformten Wabenkörper auf einem Transportabschnitt (142) anordnet,
ein vierter Lagerungsbehälter-Bewegungsmechanismus des ausgeformten Körpers (149) den leeren Lagerungsbehälter des ausgeformten Körpers, aus dem der ausgeformte Wabenkörper herausgenommen ist, auf einen weiteren leeren Lagerungsbehälter des ausgeformten Körpers stapelt, und
ein Vorlagerungsbehälter-Herausnahmeabschnitt des ausgeformten Körpers (144d, 244b, 344b) den leeren Lagerungsbehälter des ausgeformten Körpers stapelt und hält.

6. Verfahren zur Herstellung eines Wabenstrukturkörpers nach Anspruch 5, bei dem
ein Ort, an dem der dritte Lagerungsbehälter-Bewegungsmechanismus des ausgeformten Körpers den Lagerungsbehälter des ausgeformten Körpers, in dem der behandelte ausgeformte Wabenkörper angeordnet ist, unterzubringen hat, wenn der Roboterarm den behandelten ausgeformten Wabenkörper unter Verwendung des Halteabschnitts anhebt, sich auf der oberen Seite bezüglich eines Orts befindet, wo der vierte Lagerungsbehälter-Bewegungsmechanismus des ausgeformten Körpers den leeren Lagerungsbehälter des ausgeformten Körpers zu stapeln hat.

7. Verfahren zur Herstellung eines Wabenstrukturkörpers nach Anspruch 5, bei dem
ein Ort, wo der dritte Lagerungsbehälter-Bewegungsmechanismus des ausgeformten Körpers den Lagerungsbehälter des ausgeformten Körpers, in dem der behandelte ausgeformte Wabenkörper angeordnet ist, unterzubringen hat, wenn der Roboterarm den behandelten ausgeformten Wabenkörper unter Verwendung eines Halteabschnitts anhebt, sich auf der oberen Seite bezüglich eines Orts befindet, wo der Lagerungsbehälter-Zuführabschnitt des ausgeformten Körpers einen Lagerungsbehälter des ausgeformten Körpers, in dem der behandelte ausgeformte Wabenkörper angeordnet ist, zu stapeln und zu halten hat.

## Revendications

1. Procédé pour fabriquer un corps à structure en nid d'abeilles incluant un corps cuit en nid d'abeilles, comprenant :
la production d'un corps moulé en nid d'abeilles (11) en forme de colonne, dans lequel une pluralité de cellules sont placées parallèlement les unes aux autres dans une direction longitudinale avec une paroi cellulaire entre elles par moulage d'une matière première en céramique ;
la production d'un corps cuit en nid d'abeilles en effectuant au moins un traitement de séchage et un traitement de cuisson sur ledit corps moulé en nid d'abeilles (11) après la production dudit corps moulé en nid d'abeilles ;
**caractérisé par**
le placement dudit corps moulé en nid d'abeilles (11) sur lequel ledit traitement de séchage et/ou ledit traitement de cuisson sont effectués dans un conteneur de stockage de corps moulé (143) de façon à temporairement stocker ledit corps moulé en nid d'abeilles traité dans ledit conteneur de stockage de corps moulé (143) ;
l'enlèvement dudit corps moulé en nid d'abeilles traité (11) placé dans le conteneur de stockage de corps moulé (143) hors du conteneur de stockage de corps moulé (143) ; et
le transport dudit corps moulé en nid d'abeilles traité et enlevé (11) vers un processus suivant ;
dans lequel
dans le stockage temporaire dudit corps moulé en nid d'abeilles traité (11), une partie d'induction de conteneur de préstockage de corps moulé (144b, 144d, 244d, 344a) empile et maintient un conteneur de stockage de corps moulé vide, un premier mécanisme de déplacement de conteneur de stockage de corps moulé (145) déplace ledit conteneur de stockage de corps moulé vide dans la direction haut / bas et/ou la direction horizontale pour placer ledit conteneur de stockage de corps moulé vide dans un emplacement prescrit,
un bras robotisé (141) soulève et déplace le corps moulé en nid d'abeilles traité situé au-dessus d'une partie formant convoyeur (142) en utilisant une partie de maintien, et place ledit corps moulé en nid d'abeilles traité à l'intérieur du conteneur de stockage de corps moulé vide placé dans ledit emplacement prédéterminé,
un deuxième mécanisme de déplacement de conteneur de stockage de corps moulé (149) empile le conteneur de stockage de corps moulé ayant ledit corps moulé en nid d'abeilles traité placé en son sein sur un conteneur de stockage de corps moulé ayant un autre corps moulé en nid d'abeilles traité placé en son sein, et
une partie d'enlèvement de conteneur de post-stockage de corps moulé (144d ; 244b ; 344b) empile et maintient le conteneur de stockage de corps moulé ayant ledit corps moulé en nid d'abeilles traité placé en son sein.

2. Procédé pour fabriquer un corps à structure en nid d'abeilles selon la revendication 1,
comprenant en outre
l'exécution d'au moins un traitement d'ouverture - scellement, après avoir produit ledit corps moulé en nid d'abeilles,
ledit corps moulé en nid d'abeilles traité et temporairement stocké étant un corps moulé en nid d'abeilles sur lequel le traitement de séchage est effectué, un corps moulé en nid d'abeilles sur lequel le traitement de séchage et le traitement d'ouverture - scellement sont effectués, ou un corps moulé en nid d'abeilles sur lequel le traitement de séchage, le traitement d'ouverture - scellement et le traitement de cuisson sont effectués.

3. Procédé pour fabriquer un corps à structure en nid d'abeilles selon la revendication 1 ou 2,
dans lequel
un emplacement où ledit premier mécanisme de déplacement de conteneur de stockage de corps moulé doit placer ledit conteneur de stockage de corps moulé vide, en plaçant ledit corps moulé en nid d'abeilles traité en son sein, est au niveau du côté supérieur par rapport à un emplacement où le conteneur de stockage de corps moulé ayant ledit corps moulé en nid d'abeilles traité placé en son sein doit être empilé.

4. Procédé pour fabriquer un corps à structure en nid d'abeilles selon la revendication 1, ou 2,
dans lequel
un emplacement où ledit premier mécanisme de déplacement de conteneur de stockage de corps moulé doit placer ledit conteneur de stockage de corps moulé vide, est au niveau du côté supérieur par rapport à un emplacement où ladite partie d'induction de conteneur de stockage de corps moulé doit empiler et maintenir ledit conteneur de stockage de corps moulé vide.

5. Procédé pour fabriquer un corps à structure en nid d'abeilles incluant un corps cuit en nid d'abeilles, comprenant :
la production d'un corps moulé en nid d'abeilles (11) en forme de colonne, dans lequel une pluralité de cellules sont placées parallèlement les unes aux autres dans une direction longitudinale avec une paroi cellulaire entre elles par moulage d'une matière première en céramique ;
la production d'un corps cuit en nid d'abeilles en effectuant au moins un traitement de séchage et un traitement de cuisson sur ledit corps moulé en nid d'abeilles (11) après la production dudit corps moulé en nid d'abeilles ;
**caractérisé par**
le stockage temporaire dudit corps moulé en nid d'abeilles (11) sur lequel ledit traitement de séchage et/ou ledit traitement de cuisson sont effectués dans un conteneur de stockage de corps moulé (143),
l'enlèvement dudit corps moulé en nid d'abeilles traité (11), qui a été placé dans ledit conteneur de stockage de corps moulé (143) afin d'être temporairement stocké dans ledit conteneur de stockage de corps moulé (143), hors dudit conteneur de stockage de corps moulé (143) ; et
le transport du corps moulé en nid d'abeilles traité et enlevé (11) vers un processus suivant ;
dans lequel
dans ledit enlèvement dudit corps moulé en nid d'abeilles traité, une partie d'induction de conteneur de post-stockage de corps moulé (144b, 244d, 344a) empile et maintient le conteneur de stockage de corps moulé (143) ayant ledit corps moulé en nid d'abeilles traité (11) placé en son sein,
un troisième mécanisme de déplacement de conteneur de stockage de corps moulé (145) déplace le conteneur de stockage de corps moulé ayant ledit corps moulé en nid d'abeilles traité placé en son sein dans la direction haut / bas et/ou dans la direction horizontale pour placer ledit conteneur de stockage de corps moulé dans un emplacement prescrit,
un bras robotisé (141) soulève et déplace ledit corps moulé en nid d'abeilles traité placé dans ledit conteneur de stockage de corps moulé en utilisant une partie de maintien, et place ledit corps moulé en nid d'abeilles traité au-dessus d'une partie formant convoyeur (142),
un quatrième mécanisme de déplacement de conteneur de stockage de corps moulé (149) empile le conteneur de stockage de corps moulé vide ayant ledit corps moulé en nid d'abeilles traité enlevé de là sur un autre conteneur de stockage de corps moulé vide, et
une partie d'enlèvement de conteneur de préstockage de corps moulé (144d, 244b, 344b) empile et maintient ledit conteneur de stockage de corps moulé vide.

6. Procédé pour fabriquer un corps à structure en nid d'abeilles selon la revendication 5,
dans lequel
un emplacement où ledit troisième mécanisme de mouvement de conteneur de stockage de corps moulé doit placer ledit conteneur de stockage de corps moulé ayant ledit corps moulé en nid d'abeilles traité placé en son sein, lorsque ledit bras robotisé soulève ledit corps moulé en nid d'abeilles traité en utilisant la partie de maintien, est au niveau du côté supérieur par rapport à un emplacement où ledit quatrième mécanisme de déplacement de conteneur de stockage de corps moulé doit empiler ledit conteneur de stockage de corps moulé vide.

7. Procédé pour fabriquer un corps à structure en nid d'abeilles selon la revendication 5,
dans lequel
un emplacement où ledit troisième mécanisme de déplacement de conteneur de stockage de corps moulé doit placer ledit conteneur de stockage de corps moulé ayant ledit corps moulé en nid d'abeilles traité placé en son sein, lorsque ledit bras robotisé soulève ledit corps moulé en nid d'abeilles traité en utilisant une partie de maintien, est au niveau du côté supérieur par rapport à un emplacement où ladite partie d'induction de conteneur de stockage de corps moulé doit empiler et maintenir un conteneur de stockage de corps moulé ayant ledit corps moulé en nid d'abeilles traité placé en son sein.
